# FASCICULE DE BREVET EUROPEEN

(11) **EP 4 433 311 B1**
(45) Date de publication et mention de la délivrance du brevet: **26.11.2025**
(21) Numéro de dépôt: 22802686.0
(22) Date de dépôt: 25.10.2022
(51) Int. Cl.: B60B 7/01, B60B 21/10

(54) **ENSEMBLE POUR ROUE DE VÉHICULE AUTOMOBILE COMPORTANT UNE JANTE AVEC DÉFLECTEUR AÉRODYNAMIQUE**
ANORDNUNG FÜR KRAFTFAHRZEUGRAD MIT EINER RADFELGE MIT AERODYNAMISCHEM DEFLEKTOR
ASSEMBLY FOR MOTOR VEHICLE WHEEL HAVING A WHEEL RIM WITH AERODYNAMIC DEFLECTOR

(30) Priorité: 19.11.2021 FR 2112237
(43) Date de publication de la demande: 25.09.2024
(73) Titulaire: Stellantis Auto SAS, 78300 Poissy (FR)
(72) Inventeur: PALPACUER, Eric, 75013 PARIS (FR); GILBERT, Vincent, 92310 SEVRES (FR); DELATTRE, Nicolas, 80290 NAMPS MAISNIL (FR)
(74) Mandataire: BCIP
(86) Numéro de dépôt international: PCT/FR2022/052025
(87) Numéro de publication internationale: WO 2023/089261

(56) Documents cités:
- WO-A1-98/58809
- WO-A1-98/58809
- DE-U1- 29 719 120
- DE-U1- 29 719 120
- FR-A1- 2 948 319
- FR-A1- 2 948 319

## Description

La présente invention concerne un ensemble pour de roue de véhicule automobile comportant une jante équipée d'un déflecteur aérodynamique, ainsi qu'une roue et un véhicule automobile comprenant ce type d'ensemble. Un tel ensemble est connu du WO9858809A.

Les roues des véhicules automobiles comportent une jante qui peut être réalisée en tôle emboutie ou en alliage d'aluminium moulé, recevant un pneumatique ajusté entre deux rebords périphériques. Le contour radialement interne de chaque flanc du pneumatique est maintenu en appui sur la face intérieure du rebord par la pression dans le pneumatique, ce qui assure son blocage permettant de transmettre un couple entre la jante et ce pneumatique.

La jante peut présenter une face tournée vers l'extérieur du véhicule suivant sa direction transversale, dessinée pour améliorer l'aérodynamisme du véhicule en limitant des turbulences sur le côté de ce véhicule au niveau de chaque roue. Cette face extérieure de la jante peut être formée directement sur le métal pour les jantes en alliage d'aluminium, ou être formée sur un enjoliveur recouvrant la jante à l'intérieur de son rebord de maintien du pneumatique.

Cependant on obtient alors sur le contour de la roue un creux circulaire formé radialement au-dessus du rebord, correspondant à l'épaisseur de ce rebord qui dépasse vers l'extérieur par rapport au flanc du pneumatique. Ce creux circulaire perturbe l'écoulement de l'air sur les côtés du véhicule, et limite l'amélioration aérodynamique qui peut être réalisée sur la face extérieure de la jante.

En complément, un type de couronne d'enjoliveur connu, présenté notamment par les documents US-A-3883182 et US-A1-20060175891, comporte une forme sensiblement plate insérée entre le rebord et le flanc du pneumatique, qui est maintenue par la pression de serrage entre ces éléments. Toutefois on obtient toujours un creux circulaire autour du rebord de jante.

Le coefficient de pénétration dans l'air Cx du véhicule donné directement par sa forme aérodynamique, conditionne sa consommation d'énergie qui pose des problèmes de réduction des émissions de gaz carbonique CO2 pour les véhicules équipés d'un moteur thermique, et d'autonomie pour les véhicules électriques.

Afin d'améliorer l'aérodynamisme d'une roue de vélo, un type de couronne de déflecteur connu, présenté notamment par le document FR-A1-2948319, comporte une base circulaire insérée dans une rainure formée sur le contour radialement externe du rebord de jante, équipée d'une lèvre s'ajustant sur la face extérieure de ce rebord pour la prolonger vers l'extérieur, qui se termine en appui sur le flanc du pneumatique en fermant le creux circulaire.

Toutefois ce type de couronne de déflecteur utilise pour sa fixation une rainure circulaire formée sur le contour extérieur du rebord, qui s'intercale axialement entre le flanc du pneumatique et la face extérieure de ce rebord. On obtient une jante présentant un profil particulier qui n'est pas standard, et une largeur axiale du rebord qui est plus importante pour former la rainure circulaire.

La présente invention a notamment pour but d'éviter ces problèmes de l'art antérieur. Elle propose à cet effet un ensemble pour roue de véhicule automobile comprenant une jante comportant sur une face un rebord circulaire de maintien d'un flanc de pneumatique, et comprenant un déflecteur aérodynamique formant une couronne s'ajustant sur la face transversale extérieure du rebord, cet ensemble étant remarquable en ce que le déflecteur comporte plusieurs ergots de positionnement répartis sur sa face intérieure tournée vers le rebord, s'ajustant chacun dans un creux du rebord.

Un avantage de cet ensemble est que de manière simple, en formant des creux sur le rebord permettant de recevoir les plots, et en les répartissant sur le contour, on assure un positionnement et une fixation du déflecteur sur une jante qui est peu modifiée. On peut utiliser une jante comprenant un profil de rebord standard, en ajoutant dessus les creux.

L'ensemble pour roue de véhicule automobile selon l'invention peut comporter de plus une ou plusieurs des caractéristiques suivantes, qui peuvent être combinées entre elles.

Avantageusement, chaque creux se prolonge par une rainure orientée suivant une direction circonférentielle, recevant un ergot après une rotation du déflecteur.

Dans ce cas, avantageusement les ergots forment des crochets tournés vers l'axe de la jante, les creux et les rainures étant ouverts radialement vers l'extérieur pour recevoir ces crochets.

De plus, avantageusement l'ensemble comporte un dispositif de blocage en rotation du déflecteur.

En particulier, le déflecteur peut comporter des perçages recevant des vis engagés dans des perçages de fixation formés sur la jante.

Selon l'invention, la jante comporte des branches radiales reliant un moyeu au contour circulaire extérieur, les creux et les perçages de fixation étant formés sur ces branches, et la jante comporte en outre des perçages de fixation formés sur lesdites branches et lesdits perçages de fixation étant aptes à recevoir des éléments de fixation pour fixer le déflecteur à la jante.

Avantageusement, le déflecteur couvre entièrement la face transversale extérieure du rebord.

Avantageusement, le déflecteur comporte un centrage sur le contour radialement externe du rebord.

L'invention a aussi pour objet une roue de véhicule automobile comportant un pneumatique monté sur un ensemble comprenant l'une quelconque des caractéristiques précédentes, remarquable en ce que la face extérieure du déflecteur se termine suivant la direction radiale en venant de manière sensiblement tangente sur le flanc du pneumatique.

L'invention a de plus pour objet un véhicule automobile équipé de roues comportant un ensemble comprenant l'une quelconque des caractéristiques précédentes. L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue en coupe axiale d'une roue de véhicule automobile selon l'art antérieur ;
[Fig. 2] est une vue en coupe axiale d'un ensemble selon l'invention ;
[Fig. 3] est une vue en coupe axiale de détail du déflecteur aérodynamique de cet ensemble ;
[Fig. 4] présente en vue éclatée la roue complète ;
[Fig. 5] est une vue de détail de cette roue complète ; et
[Fig. 6] est une vue en coupe axiale de détail du déflecteur aérodynamique au niveau d'un ergot de positionnement.

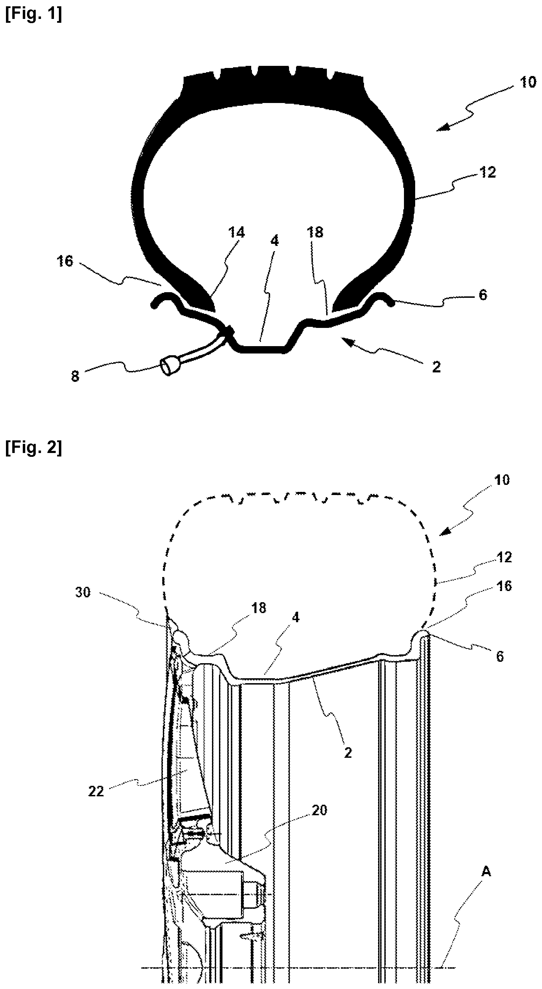

La figure 1 présente le contour extérieur circulaire 2 d'une jante formée par une tôle emboutie, comprenant un profil constant comportant un creux central 4 encadré de chaque côté par un rebord 6 dépassant radialement vers l'extérieur.

Le pneumatique 10 comporte une bande de roulement extérieure, se prolongeant de chaque côté par un flanc radial 12 qui se termine par une ceinture circulaire 14 ajustée autour d'une partie cylindrique 18 assurant son centrage, et plaquée sur la face interne du rebord 6 par la pression contenue dans ce pneumatique. Une valve 8 ajustée sur un perçage du contour de la jante 2 permet un gonflage du pneumatique 10.

La ceinture circulaire 14 venant en appui sur une face intérieure du rebord 6, axialement en retrait par rapport à l'extrémité extérieure de ce rebord, forme à ce niveau un creux circulaire 16 disposé radialement entre le rebord et le flanc bombé du pneumatique 12.

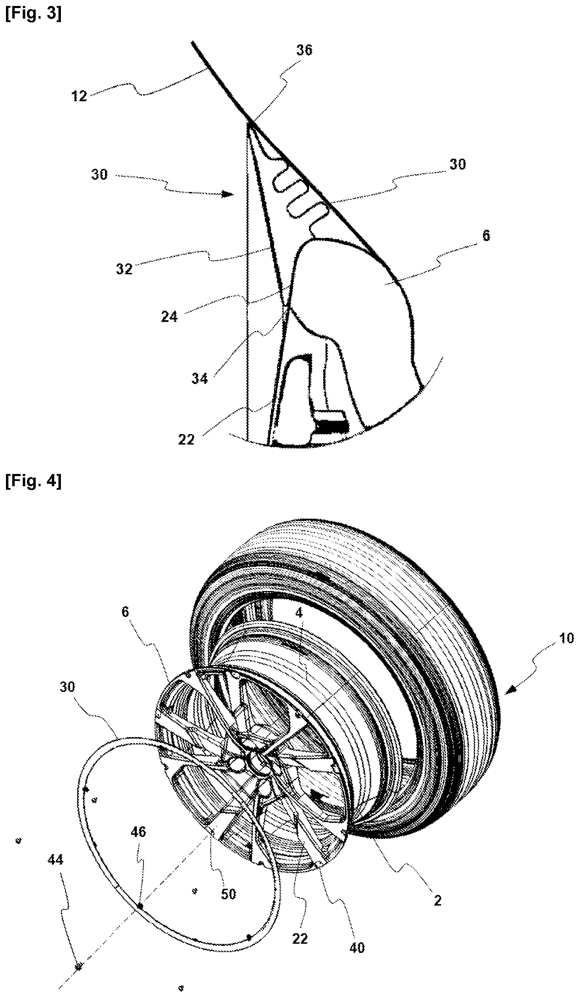

Les figures 2 et 3 présentent une jante comportant dans un même moulage en alliage d'aluminium un moyeu 20 centré sur un axe principal A, relié par des bras radiaux 22 au contour extérieur 2.

Les rebords 6 présentent une face extérieure transversale 24 sensiblement plate 24, disposant d'une forme légèrement conique s'ouvrant vers l'intérieur de la jante, qui se prolonge radialement vers l'extérieur par un contour arrondi revenant vers le centre de la jante, puis par la partie cylindrique 18 de centrage de la ceinture du pneumatique 14.

Le rebord extérieur 6 comporte un déflecteur aérodynamique 30 réalisé par un moulage d'une matière plastique, formant une couronne comprenant une face extérieure transversale sensiblement plate 32, disposant d'une forme légèrement conique s'ouvrant vers le côté extérieur de la jante. Suivant une direction radiale la face extérieure du déflecteur 32 part du point radialement intérieure 34 de la face extérieure du rebord 24, et se termine au point de contact 36 sur le flanc du pneumatique 12, en venant de manière sensiblement tangente sur ce flanc.

Le déflecteur 30 présente une section axiale constante comprenant une face intérieure comportant en partant du côté tourné vers l'axe A, un contour qui s'appuie sur la face extérieure du rebord 24, puis sur l'arrondi supérieur revenant vers l'intérieur de la jante, en réalisant un centrage du déflecteur sur cet arrondi.

On a ensuite une face intérieure 38 d'appui sur le flanc du pneumatique 12, comprenant trois bossages successifs appuyant sur ce flanc, laissant entre eux des rainures permettant de réduire la quantité de matière plastique ce qui allège le déflecteur et facilite son moulage.

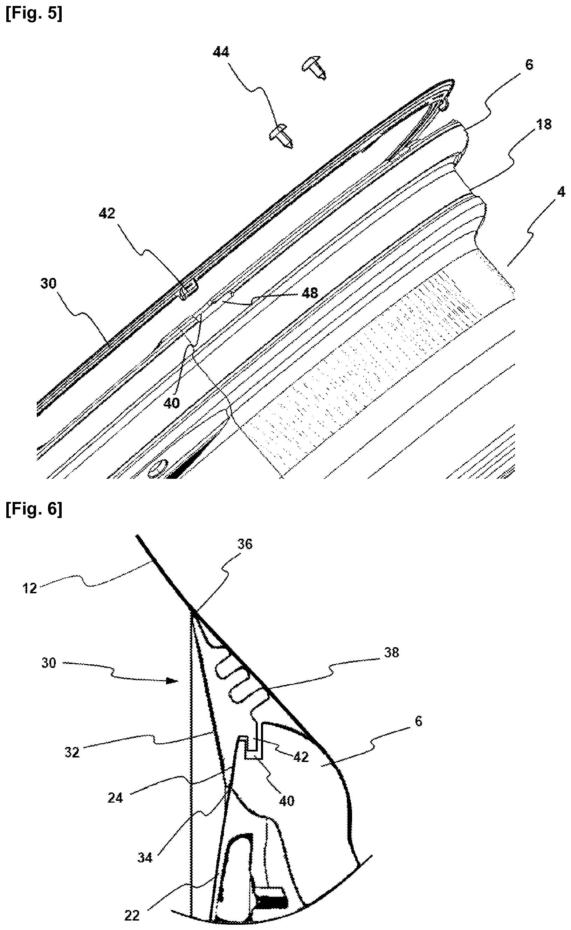

Les figures 4, 5 et 6 présentent la jante comportant sur la face extérieure du rebord 24 cinq creux 40 ouverts axialement et radialement vers l'extérieur, qui se prolongent chacun par une rainure 48 orientée suivant une direction circonférentielle, ouverte aussi radialement vers l'extérieur. La face intérieure du déflecteur 30 comporte cinq crochets 42 qui sont tournés vers l'axe A.

Le montage du déflecteur 30 se fait en l'approchant face à la jante, avec une introduction de chaque crochet 42 dans un creux ouvert vers l'extérieur 40, pour l'emmener au fond de ce creux. L'opérateur effectue ensuite une petite rotation du déflecteur 30 pour engager chaque crochet 42 au fond de la rainure 48, avec un montage du type baïonnette, sa pointe descendant dans la rainure en assurant le maintien axial.

L'opérateur introduit ensuite cinq vis 44 dans des perçages 46 du déflecteur 30, disposés sur le bord radialement interne de ce déflecteur, pour les visser dans des perçages de fixation correspondants 50 de la face extérieure de la jante afin d'empêcher une rotation inverse de ce déflecteur.

Avantageusement les creux 40 et les perçages de fixation 50 sont formés à l'extrémité radialement externe des branches 22 de la jante, présentant une surface permettant ces usinages.

En variante le blocage en rotation du déflecteur peut se faire pas tout autre dispositif, en particulier par un clipsage dans la rainure 48 qui assurerait son blocage en rotation.

On obtient un montage simple, rapide et efficace du déflecteur 30 qui assure par son serrage sur le flanc du pneumatique 12, une continuité entre le point en bas de la face extérieure 24 du rebord 6 et un point de tangence du flanc du pneumatique 12, formant une surface lisse sensiblement plate donnant un bon aérodynamisme au véhicule.

Des mesures d'aérodynamisme sur un véhicule de tourisme équipé de ce déflecteur 30 sur ses quatre roues, ont montré un gain du coefficient de pénétration dans l'air multiplié par la surface frontale SCx, d'environ 0,5dm². De plus le déflecteur aérodynamique 30 forme un système passif, qui est peu coûteux.

Par ailleurs on peut prévoir différentes couleurs pour le déflecteur aérodynamique 30, facilement obtenues par une matière plastique teintée dans la masse, pour assurer en plus une fonction esthétique valorisante.

## Revendications

1. Ensemble pour roue de véhicule automobile comprenant une jante comportant sur une face un rebord circulaire (6) de maintien d'un flanc de pneumatique (12), et comprenant un déflecteur aérodynamique (30) formant une couronne s'ajustant sur la face transversale extérieure (24) du rebord (6), le déflecteur (30) comportant plusieurs ergots de positionnement (42) répartis sur sa face intérieure tournée vers le rebord (6), s'ajustant chacun dans un creux (40) du rebord (6), **caractérisé en ce que** la jante comporte des branches radiales (22) reliant un moyeu (20) de la jante à un contour circulaire extérieur (2) de ladite jante, les creux (40) étant formés sur lesdites branches (22) et **en ce que** la jante comporte en outre des perçages de fixation (50) formés sur lesdites branches (22), lesdits perçages de fixation (50) étant aptes à recevoir des éléments de fixation (44) pour fixer le déflecteur (30) à la jante.

2. Ensemble selon la revendication 1, **caractérisé en ce que** chaque creux (40) se prolonge par une rainure (48) orientée suivant une direction circonférentielle, recevant un ergot après une rotation du déflecteur (30).

3. Ensemble selon la revendication 2, **caractérisé en ce que** les ergots (42) forment des crochets tournés vers l'axe de la jante (A), les creux (40) et les rainures (48) étant ouverts radialement vers l'extérieur pour recevoir ces crochets.

4. Ensemble selon la revendication 3, **caractérisé en ce qu'**il comporte un dispositif de blocage en rotation du déflecteur (30).

5. Ensemble selon la revendication 4, **caractérisé en ce que** le déflecteur (30) comporte des perçages (46) recevant des vis (44) engagés dans des perçages de fixation (50) formés sur la jante.

6. Ensemble selon l'une quelconque des revendications précédentes, **caractérisé en ce que** le déflecteur (30) couvre entièrement la face transversale extérieure (24) du rebord (6).

7. Ensemble selon l'une quelconque des revendications précédentes, **caractérisé en ce que** le déflecteur (30) comporte un centrage sur le contour radialement externe du rebord (6).

8. Roue de véhicule automobile comportant un pneumatique (10) monté sur un ensemble selon l'une quelconque des revendications précédentes, **caractérisé en ce que** la face extérieure du déflecteur (32) se termine suivant la direction radiale en venant de manière sensiblement tangente sur le flanc du pneumatique (12).

9. Véhicule automobile équipé de roues, **caractérisé en ce que** ces roues comportent un ensemble selon l'une quelconque des revendications 1 à 7.

## Patentansprüche

1. Anordnung für Kraftfahrzeugräder mit einer Felge, die auf einer Seite einen kreisförmigen Flansch (6) zum Halten einer Reifenflanke (12) aufweist, und mit einer aerodynamischen Ablenkeinrichtung (30), die einen Kranz bildet, der auf die äußere Querfläche (24) des Flansches (6) passt, wobei die Ablenkeinrichtung (30) mehrere Positioniernasen (42) aufweist, die auf ihrer dem Flansch (6) zugewandten Innenseite verteilt sind und jeweils in eine Ausnehmung (40) des Flansches (6) passen, **dadurch gekennzeichnet, dass** die Felge miteinander verbundene radiale Schenkel (22) aufweist Eine Felgennabe (20) mit einem äußeren kreisförmigen Umriss (2) der Felge, wobei die Ausnehmungen (40) an den Schenkeln (22) ausgebildet sind, und wobei die Felge ferner Befestigungsbohrungen (50) aufweist, die an den Schenkeln (22) ausgebildet sind, wobei die Befestigungsbohrungen (50) zur Aufnahme von 15 Befestigungselementen (44) zur Befestigung des Ablenkers (30) an der Felge geeignet sind.

2. Anordnung nach Anspruch 1, **dadurch gekennzeichnet, dass** sich jede Vertiefung (40) durch eine Nut (48) verlängert, die in einer Umfangsrichtung ausgerichtet ist und nach einer Drehung des Ablenkers (30) einen Zapfen aufnimmt.

3. Anordnung nach Anspruch 2, **dadurch gekennzeichnet, dass** die Nasen (42) Haken bilden, die zur Achse der Felge (A) gerichtet sind, wobei die Ausnehmungen (40) und die Nuten (48) radial nach außen offen sind, um diese Haken aufzunehmen.

4. Anordnung nach Anspruch 3, **dadurch gekennzeichnet, dass** sie eine Vorrichtung zur Verdrehsicherung der Ablenkeinrichtung (30) aufweist.

5. Anordnung nach Anspruch 4, **dadurch gekennzeichnet, dass** der Abweiser (30) Bohrungen (46) aufweist, die Schrauben (44) aufnehmen, die in Befestigungsbohrungen (50) eingreifen, die an der Felge ausgebildet sind.

6. Anordnung nach einem der vorhergehenden Ansprüche, **dadurch gekennzeichnet, dass** die Ablenkeinrichtung (30) die äußere Querfläche (24) des Flansches (6) vollständig bedeckt.

7. Anordnung nach einem der vorhergehenden Ansprüche, **dadurch gekennzeichnet, dass** die Ablenkeinrichtung (30) eine Zentrierung an der radial äußeren Kontur des Flansches (6) aufweist.

8. Kraftfahrzeugrad mit einem Reifen (10), der an einer Baugruppe nach einem der vorhergehenden Ansprüche montiert ist, **dadurch gekennzeichnet, dass** die Außenfläche der Ablenkeinrichtung (32) in radialer Richtung im Wesentlichen tangential zur Seitenwand des Reifens (12) endet.

9. Kraftfahrzeug mit Rädern, **dadurch gekennzeichnet, dass** diese Räder eine Anordnung nach einem der Ansprüche 1 bis 7 aufweisen.

## Claims

1. An assembly for a motor vehicle wheel comprising a rim comprising on one face a circular rim (6) for holding a tyre sidewall (12), and comprising an aerodynamic deflector (30) forming a ring fitting onto the outer transverse face (24) of the rim (6), the deflector (30) comprising several positioning lugs (42) distributed on its inner face shift towards the rim (6), each fitting into a hollow (40) of the rim (6), wherein the rim comprises radial branches (22) connecting one hub (20) of the rim has an outer circular contour (2) of said rim, the recesses (40) being formed on said branches (22) and in that the rim further comprises fixing holes (50) formed on said branches (22), said fixing holes (50) being adapted to fixing items 15 (44) to fix the deflector (30) to the rim.

2. Assembly according to claim 1, wherein each recess (40) is extended by a groove (48) orientated along a circumferential management, receiving a lug after a rotation of the deflector (30).

3. Assembly according to Claim 2, **characterised in that** the lugs (42) form hooks turned towards the axis of the rim (A), the recesses (40) and the grooves (48) being open radially outwards in order to receive these hooks.

4. Assembly according to Claim 3, **characterised in that** it comprises a device for preventing the deflector (30) from rotating.

5. Assembly according to Claim 4, **characterised in that** the deflector (30) comprises bores (46) receiving screws (44) engaged in fixing bores (50) formed on the rim.

6. Assembly according to any one of the previous claims, wherein the deflector (30) entirely covers the outer transverse face (24) of the rim (6).

7. Assembly according to any one of the previous claims, **characterised in that** the deflector (30) comprises a centring on the radially outer contour of the rim (6).

8. Motor vehicle wheel comprising a tyre (10) mounted on an assembly according to any one of the previous claims, wherein the outer face of the deflector (32) terminates in the radial management coming substantially tangentially to the sidewall of the tyre (12).

9. Motor vehicle equipped with wheels, **characterised in that** these wheels comprise an assembly according to any one of Claims 1 to 7.
